# DEMANDE DE BREVET EUROPEEN

(11) **EP 2 060 481 A1**
(43) Date de publication de la demande: **20.05.2009**
(21) Numéro de dépôt: 08305803.2
(22) Date de dépôt: 14.11.2008
(51) Int. Cl.: B62K 21/02, F16F 15/08

(54) **Dispositif de limitation de vibrations dans un vélo**

(30) Priorité: 14.11.2007 FR 0759046
(71) Demandeur: TIME SPORT INTERNATIONAL, 58 640 Varennes-Vauzelles (FR)
(72) Inventeur: Gueugneaud, Jean-Marc, 38110, Saint Clair de la Tour (FR)
(74) Mandataire: Fantin, Laurent

(57) **Abrégé**

L'objet de l'invention est un dispositif de limitation de vibrations dans un vélo comprenant un cadre (10) et au moins deux roues (12), ledit dispositif comprenant au moins un dispositif (20) de filtration et d'absorption d'une gamme donnée de vibrations comprenant des moyens de dissipation (24) de l'énergie vibratoire issue de ladite gamme donnée de vibrations et des moyens de solidarisation (26) à au moins une partie du cadre (10) dudit vélo, **caractérisé en ce que** les moyens de dissipation (24) comprennent au moins une extrémité fixe (27) reliée aux moyens de solidarisation (26) et au moins une extrémité libre (29).

## Description

La présente invention est relative à un dispositif de limitation de vibrations dans un vélo.

Dans une utilisation normale ou sportive, un vélo transmet un certain nombre de vibrations au pratiquant.

Lors d'une utilisation normale du vélo, par exemple pour une longue promenade ou pour une utilisation quotidienne en tant que moyen de déplacement en ville, ces vibrations peuvent devenir désagréables, gêner la conduite voire et, à la longue, provoquer des douleurs.

Au cours d'une pratique sportive et intensive, c'est-à-dire avec un rythme de roulage plus élevé et sur de longues distances, les vibrations transmises par le vélo peuvent causer des douleurs, accélérer la fatigue et éventuellement entraîner une chute du coureur.

Les vibrations considérées comme les plus néfastes se situent au niveau du poste de pilotage et dans une gamme de fréquences comprises entre 20 Hz et 50 Hz, ces vibrations correspondent essentiellement à un travail de flexion de la fourche par rapport à son axe au niveau du poste de pilotage.

Dans certaines conditions, notamment dans les descentes dans lesquelles les coureurs cyclistes atteignent des vitesses supérieures à 60 km/h, il est arrivé que des coureurs perdent le contrôle de leur vélo et soient obligés de ralentir en raison de vibrations trop importantes.

Lors de l'apparition incontrôlée de ces vibrations, le cadre du vélo se met à osciller plus ou moins rapidement.

Ces vibrations incontrôlées induisent un effort de résistance physique supplémentaire de la part du coureur. A long terme, ces vibrations incontrôlées deviennent préjudiciables à la performance physique du coureur.

De plus, ces vibrations peuvent détériorer ou accélérer l'usure de certaines pièces du vélo.

Que cela soit dans une utilisation normale ou sportive, les vibrations sont le résultat de différentes interactions entre le vélo, l'utilisateur et les conditions de roulage.

Ainsi, le poids de l'utilisateur et les conditions de roulage, comme l'état du revêtement de la chaussée et la vitesse de roulage, influent beaucoup sur les caractéristiques des vibrations transmises au pratiquant.

En tant qu'élément directement au contact du revêtement de la chaussée, les roues, à savoir leur diamètre, leur masse et leur moment d' inertie, ainsi que le type de pneu qu'elles reçoivent et leur pression de gonflage, sont les premiers éléments qui peuvent être dimensionnés et optimisés pour limiter la transmission de vibrations au cadre du vélo.

Toutefois, les fabricants de cadres de vélo ne maîtrisent pas le type de roues et de pneus qui sont montés par l'utilisateur, et ils doivent donc concevoir des cadres permettant de pondérer au mieux le comportement de différents types de roues et de pneus.

Différents choix dans la conception d'un cadre de vélo permettent aux fabricants de limiter l'apparition ou la transmission de vibrations à l'utilisateur, il peut s'agir : de son matériau de réalisation, de sa géométrie, de l'angle et du déport de la fourche, ...

Par exemple, les zones les moins sollicitées d'un cadre peuvent être réalisées avec une rigidité moindre afin d'absorber une partie des vibrations, ou la selle peut être associée à des moyens permettant de limiter la transmission des vibrations à l'utilisateur.

Cependant, le poids de l'utilisateur et les conditions de roulage ne sont pas des paramètres fixes et maîtrisables, et il apparaît toujours des vibrations susceptibles d'être gênantes ou douloureuses pour l'utilisateur.

Aussi, la présente invention vise à pallier les inconvénients de l'art antérieur en proposant un dispositif de limitation de vibrations dans un vélo qui est ajustable à une plage d'utilisateurs, notamment par plage de poids, et à une gamme donnée de vibrations, notamment la plus néfaste pour l'utilisateur.

A cet effet, l'invention a pour objet un dispositif de limitation de vibrations dans un vélo comprenant un cadre et au moins deux roues, ledit dispositif comprenant au moins un dispositif de filtration et d'absorption d'une gamme donnée de vibrations comprenant des moyens de dissipation de l'énergie vibratoire issue de ladite gamme donnée de vibrations et des moyens de solidarisation à au moins une partie du cadre dudit vélo, lesdits moyens de dissipation comprennent au moins une extrémité fixe reliée aux moyens de solidarisation et au moins une extrémité libre.

De plus, ledit dispositif de limitation de vibrations selon l'invention est léger, compact et facilement intégrable à un vélo.

D'autres caractéristiques et avantages ressortiront de la description qui va suivre de l'invention, description donnée à titre d'exemple uniquement, en regard des dessins annexés sur lesquels :
- la figure 1 représente un dispositif de limitation des vibrations dans un deuxième mode de réalisation des moyens de dissipation selon l'invention,
- la figure 2 représente un dispositif de limitation des vibrations dans un troisième mode de réalisation des moyens de dissipation selon l'invention,
- la figure 3 représente un dispositif de limitation des vibrations dans un deuxième mode de réalisation d'un dispositif de filtration et d'absorption des vibrations selon l'invention.

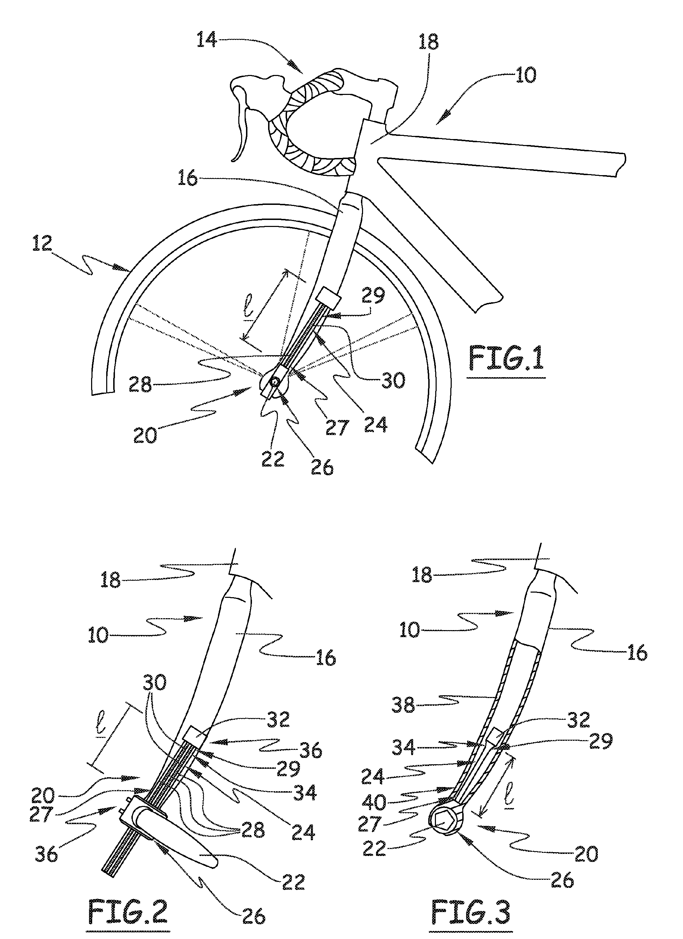

Sur la figure 1, on a représenté une partie d'un cadre 10 de vélo susceptible de recevoir un dispositif de limitations des vibrations selon l'invention.

Par cadre 10 de vélo, l'invention entend toute partie ou élément d'un vélo situé entre les roues dudit vélo, un vélo comprenant au moins deux roues 12, et l'utilisateur dudit vélo.

Sur la figure 1, on a choisi d'illustrer un exemple d'application d'un dispositif de limitation des vibrations à l'avant d'un vélo, les vibrations les plus néfastes se situant au niveau du poste de pilotage 14 dudit vélo et correspondant à un travail de flexion de la fourche 16 dudit cadre C dans son axe 18.

On estime que les vibrations les plus néfastes au niveau du poste de pilotage 14 se situent dans une gamme de fréquences comprises entre 20 Hz et 50 Hz.

Afin de limiter les vibrations sur cette gamme de fréquences comprises entre 20 Hz et 50 Hz, le dispositif selon l'invention comprend au moins un dispositif 20 de filtration et d'absorption d'une gamme donnée de vibrations rapporté sur le cadre 10 dudit vélo, notamment au niveau des moyens de fixation 22 d'une roue 12 audit cadre 10.

Par gamme donnée de vibrations, l'invention entend des vibrations se situant sur une même bande de fréquences et dont on désire limiter la propagation dans le vélo.

Selon un premier mode de réalisation, illustré sur les figures 1 et 2, le dispositif 20 de filtration et d'absorption comprend des moyens de dissipation 24 de l'énergie vibratoire issue de ladite gamme donnée de vibrations et des moyens de solidarisation 26 à au moins une partie du cadre 10 dudit vélo.

Lesdits moyens de fixation 26 sont plus particulièrement adaptés pour permettre de rapporter le dispositif 20 de filtration et d'absorption au niveau des moyens de fixation 22 d'une roue 12 à la fourche 16 du cadre.

Lesdits moyens de fixation 22 d'une roue se présentant généralement sous la forme d'un axe fileté équipé d'au moins un écrou à chaque extrémité, les moyens de solidarisation 26 du dispositif 20 de filtration et d'absorption comprennent au moins un alésage pour le passage dudit axe et des moyens de blocage en rotation par rapport à la fourche 16, le serrage desdits écrous engendrant ainsi la solidarisation dudit dispositif 20 audit cadre 10.

Bien entendu, cette application au poste de pilotage 14 du vélo n'est aucunement limitative des possibilités offertes par le dispositif selon l'invention, le dispositif 20 de filtration et d'absorption pouvant être rapporté et fixé sur n'importe quel partie ou élément d'un vélo par des moyens de solidarisation 26 appropriés et connus de l'homme du métier.

Des moyens de solidarisation 26 adaptés peuvent ainsi permettre au dispositif 20 de filtrer et d'absorber des vibrations néfastes au niveau des moyens de fixation de la roue arrière au cadre, au niveau de l'assise du vélo, ou au niveau des freins par exemple.

Pour chaque application différente, les moyens de dissipation 24 de l'énergie vibratoire sont ensuite adaptés, comme cela est détaillé ci-après, pour filtrer et absorber au mieux les vibrations dans une gamme donnée de fréquences propres à chaque application.

Ainsi, un dispositif de limitation de vibrations dans un vélo selon l'invention peut comprendre plusieurs dispositifs 20 de filtration et d'absorption au niveau de différentes parties d'un vélo, chaque dispositif 20 pouvant être dédié à l'absorption d'une même gamme donnée de vibrations ou à une gamme donnée particulière à la partie du vélo au niveau de laquelle il est fixé.

Dans un mode de réalisation préféré de l'invention, les moyens de dissipation 24 comprennent au moins une extrémité fixe 27 reliée aux moyens de solidarisation 26 et au moins une extrémité libre 29.

Par extrémité libre 29, l'invention entend une partie des moyens de dissipation 24 située à un bout de la longueur desdits moyens de dissipation, à l'opposé des moyens de solidarisation 26 et susceptible de vibrer librement.

Dans un premier mode de réalisation, les moyens de dissipation 24 de l'énergie vibratoire comprennent au moins une lame 28 de longueur I reliée aux moyens de solidarisation 26 et réalisée dans un premier matériau sensiblement rigide, et au moins une bande 30 reliée aux moyens de solidarisation 26, réalisée dans un deuxième matériau sensiblement élastique et accolée à ladite lame 28.

La lame 28 et la bande 30 sont reliées aux moyens de solidarisation 26 par une liaison rigide, notamment une liaison assimilable à un encastrement.

De cette façon, les vibrations auxquelles sont soumis les moyens de solidarisation 26 sont directement transmises à la lame 28 sensiblement rigide. La fréquence et l'amplitude du mouvement vibratoire de la lame 28 vont dépendre de ses dimensions, dont notamment sa longueur I, et de la rigidité dudit premier matériau dans laquelle ladite lame 28 est réalisée.

Par la suite, la bande 30 en contact avec la lame 28 est soumise à des efforts tangentiels issus des oscillations de ladite lame 28.

Les contraintes tangentielles, se répartissant sur la longueur de la bande 30, entraînent une déformation par cisaillement de ladite bande 30 et donc une dissipation de l'énergie issue des vibrations de la lame 28.

Dans un deuxième mode de réalisation, illustré en figure 1, les moyens de dissipation 24 de l'énergie vibratoire comprennent deux lames 28 de longueur I reliées aux moyens de solidarisation 26 et réalisées dans un premier matériau sensiblement rigide et une bande 30 réalisée en un deuxième matériau sensiblement élastique, ladite bande 30 étant enserrée par lesdites lames 28.

De cette manière, les vibrations auxquelles sont soumis les moyens solidarisation 26 sont directement transmises aux lames 28 sensiblement rigides. La fréquence et l'amplitude du mouvement vibratoire des lames 28 vont dépendre de leurs dimensions, dont notamment leur longueur I, et de la rigidité dudit premier matériau dans laquelle lesdites lames 28 sont réalisées.

Par la suite, la bande 30 en contact avec les deux lames 28 est soumise à des efforts tangentiels issus des oscillations desdites deux lames 28.

Les contraintes tangentielles, se répartissant sur la longueur de la bande 30, entraînent une déformation par cisaillement de ladite bande 30 et donc une dissipation de l'énergie issue des vibrations des deux lames 28.

Dans ce deuxième mode de réalisation, l'enserrement par les deux lames 28 améliore l'effet de cisaillement dans la bande 30, ce qui favorise la dissipation de l'énergie issue des vibrations.

Dans un troisième mode de réalisation, illustré sur la figure 2, les moyens de dissipation 24 de l'énergie vibratoire comprennent au moins n lames 28 de longueur I reliées aux moyens de solidarisation 26 et réalisées dans un premier matériau sensiblement rigide, n étant un nombre entier supérieur à 1, et au moins (n-1) bandes 30 réalisées en un deuxième matériau sensiblement élastique, chaque bande 30 étant enserrée par deux lames 28.

De la même manière que précédemment, les vibrations auxquelles sont soumis les moyens solidarisation 26 sont directement transmises aux n lames 28 sensiblement rigides.

La fréquence et l'amplitude du mouvement vibratoire des n lames 28 vont dépendre de leurs dimensions, dont notamment leur longueur I, et de la rigidité dudit premier matériau dans laquelle lesdites n lames 28 sont réalisées.

Par la suite, chaque bande 30 en contact avec deux lames 28 est soumise à des efforts tangentiels issus des oscillations desdites deux lames 28.

Les contraintes tangentielles, se répartissant sur la longueur de chaque bande 30, entraînent une déformation par cisaillement desdites bandes 30 et donc une dissipation de l'énergie issue des vibrations des lames 28.

Dans ce troisième mode de réalisation des moyens de dissipation 24, l'enserrement de (n-1) bandes par les n lames 28 multiplie les effets de cisaillement dans les (n-1) bandes 30, ce qui accroît encore plus la dissipation de l'énergie issue des vibrations.

Au final, les différents modes de réalisation des moyens de dissipation 24 permettent au dispositif selon l'invention de s'adapter à des gammes de vibrations de fréquences et d'amplitudes variées.

Dans un mode de réalisation préféré de l'invention, une lame 28 sensiblement rigide est réalisée dans un matériau métallique et la bande 30 sensiblement élastique est réalisée dans un matériau viscoélastique tel de l'élastomère ou du caoutchouc.

La bande 30 peut être solidarisée aux mouvements de la ou des lames 28 par tous moyens appropriés et connus de l'homme du métier. Il peut s'agir d'une solidarisation par adhérence, par frottement ou réalisée lors de la fabrication de ladite bande 30 par dépôt de son matériau viscoélastique sur le matériau métallique desdites lames 28.

Dans le deuxième et le troisième mode de réalisation des moyens de dissipation 24, il n'est pas nécessaire que la ou les bandes 30 soient reliées aux moyens de solidarisation 26. En effet, chaque bande 30 se trouvant déjà enserrée entre deux lames 28 et solidaire de leurs mouvements, elle subit nécessairement une déformation par cisaillement lors des oscillations desdites lames.

Bien entendu, dans les trois modes de réalisation des moyens de dissipation 24, plus chaque bande 30 est solidaire des mouvements de la ou des lames 28, plus l'énergie vibratoire est transmise et mieux elle sera dissipée.

Dans le premier comme dans le deuxième ou troisième mode de réalisation des moyens de dissipation 24, les dimensions, et notamment la longueur I, de la ou des lames 28 sont déterminées de manière à rapprocher le plus possible la fréquence de résonance desdits moyens de dissipation 24 des fréquences de la gamme donnée de vibrations à absorber.

En effet, plus les vibrations de ladite gamme donnée se rapprochent de la fréquence de résonance des moyens de dissipation, plus la transmission d'énergie vibratoire et, par conséquent, l'absorption des vibrations sont maximales.

Dans un mode de réalisation préféré, le dispositif 20 d'absorption et de filtration comprend des moyens de sélection 36 d'une gamme donnée de vibrations à absorber.

Lesdits moyens de sélection 36 d'une gamme donnée de vibrations comprennent au moins une masselotte 32 de masse M fixée à l'extrémité libre 34 de la(les)dite(s) lame(s) 28 de longueur I.

Avantageusement, cette masselotte 32 de masse M peut être venue de fabrication avec les moyens de dissipation 24.

Dans un mode de réalisation optimisé du dispositif 20 d'absorption et de filtration, les moyens de sélection 36 d'une gamme donnée de vibrations comprennent en plus une liaison rigide et ajustable entre les moyens de solidarisation 26 et les moyens de dissipation de l'énergie vibratoire, ladite liaison permettant la variation de la longueur I des lames 28.

Cette liaison, illustrée en figure 2, rigide et ajustable entre les moyens de solidarisation 26 et les moyens de dissipation 24 peut être réalisée par différents moyens, comme par vissage, connus de l'homme du métier et permettant un serrage/desserrage de ladite liaison.

Ces moyens de sélection 36, masselotte 32 ou liaison rigide et ajustable, permettent d'améliorer la filtration dans le sens ou ils permettent d'ajuster la fréquence de résonance des moyens de dissipation 24, plus la longueur I est augmentée, plus ladite fréquence de résonance diminue, et, plus la masse M de la masselotte 32 est augmentée, plus ladite fréquence de résonance diminue aussi.

En faisant varier la longueur I et la masse M de la masselotte 32, on peut donc obtenir le meilleur compromis (fréquence de résonance des moyens de dissipation 24)/(masse M de la masselotte 32)/(encombrement du dispositif 20 de filtration et d'absorption).

Grâce aux moyens de sélection 36, il est même possible de modifier ce compromis (fréquence de résonance des moyens de dissipation 24)/(masse M de la masselotte 32)/(encombrement du dispositif 20 de filtration et d'absorption) pour s'adapter aux conditions de roulage : type de terrain, revêtement de la chaussée... et surtout au poids, ou à la plage de poids, de l'utilisateur.

Selon un deuxième mode de réalisation, illustré en figure 2, le dispositif 20 de filtration et d'absorption peut être intégré aux moyens de fixation 22, notamment à blocage rapide, de la roue 12 au cadre 10, que ce soit au niveau de la roue 12 avant ou de la roue 12 arrière.

Selon un troisième mode de réalisation, le dispositif 20 de filtration et d'absorption est intégré à au moins une partie du cadre 10 du vélo.

Dans l'exemple illustré en figure 3, le dispositif 20 de filtration et d'absorption est intégré à un bras 38 d'une fourche 16 du cadre 10 du vélo.

Plus précisément, les moyens de dissipation 24 et la masselotte 32 sont introduits à l'intérieur dudit bras 38 creux lors de la fabrication de ladite fourche 16, les moyens de dissipation 24 étant solidaire des moyens de réception des moyens de fixation 22 de la roue 12 à la fourche 16.

Dans ce troisième mode de réalisation, les moyens de sélection 36 du dispositif 20 de filtration et d'absorption sont préréglés en usine pour absorber une gamme donnée de vibrations en fonction des conditions de roulage : type de terrain, revêtement de la chaussée... et surtout du poids, ou de la plage de poids, de l'utilisateur.

De plus, ce troisième mode de réalisation du dispositif 20 de filtration et d'absorption est intéressant car il permet d'éviter de nuire à l'esthétique et à l'aérodynamisme du vélo.

## Revendications

1. Dispositif de limitation de vibrations dans un vélo comprenant un cadre (10) et au moins deux roues (12), ledit dispositif comprenant au moins un dispositif (20) de filtration et d'absorption d'une gamme donnée de vibrations comprenant des moyens de dissipation (24) de l'énergie vibratoire issue de ladite gamme donnée de vibrations et des moyens de solidarisation (26) à au moins une partie du cadre (10) dudit vélo, **caractérisé en ce que** les moyens de dissipation (24) comprennent au moins une extrémité fixe (27) reliée aux moyens de solidarisation (26) et au moins une extrémité libre (29).

2. Dispositif de limitation de vibrations dans un vélo selon la revendication 1, **caractérisé en ce que** les moyens de dissipation (24) de l'énergie vibratoire comprennent au moins une lame (28) de longueur I reliée aux moyens de solidarisation (26) et réalisée dans un premier matériau sensiblement rigide, et au moins une bande (30) reliée aux moyens de solidarisation (26), réalisée dans un deuxième matériau sensiblement élastique et accolée à ladite lame (28).

3. Dispositif de limitation de vibrations dans un vélo selon la revendication 1 ou 2, **caractérisé en ce que** les moyens de dissipation (24) de l'énergie vibratoire comprennent au moins n lames (28) de longueur I reliées aux moyens de solidarisation (26) et réalisées dans un premier matériau sensiblement rigide, et au moins (n-1) bandes (30) réalisées en un deuxième matériau sensiblement élastique, chaque bande (30) étant enserrée par deux lames (28).

4. Dispositif de limitation de vibrations dans un vélo selon l'une des revendications 1 à 3, **caractérisé en ce que** le dispositif (20) de filtration et d'absorption comprend des moyens de sélection (36) d'une gamme donnée de vibrations.

5. Dispositif de limitation de vibrations dans un vélo selon la revendication 4, **caractérisé en ce que** les moyens de sélection (36) d'une gamme donnée de vibrations comprennent au moins une masselotte (32) de masse M fixée à l'extrémité (34) de la(les)dite(s) lame(s) (28) de longueur I.

6. Dispositif de limitation de vibrations dans un vélo selon la revendication 4 ou 5, **caractérisé en ce que** les moyens de sélection (36) d'une gamme donnée de vibrations comprennent une liaison rigide et ajustable entre les moyens de solidarisation (26) et les moyens de dissipation de l'énergie vibratoire permettant la variation de la longueur I des lames (28).

7. Dispositif de limitation de vibrations dans un vélo selon l'une des revendications 1 à 6, **caractérisé en ce qu'**au moins un dispositif (20) de filtration et d'absorption est intégré aux moyens de fixation (22) d'une roue (12) au cadre (10) du vélo.

8. Dispositif de limitation de vibrations dans un vélo selon l'une des revendication 1 à 6, **caractérisé en ce qu'**au moins un dispositif (20) de filtration et d'absorption est intégré à au moins une partie du cadre (10) du vélo.

9. Dispositif de limitation de vibrations dans un vélo selon la revendication 8, **caractérisé en ce qu'**au moins un dispositif (20) de filtration et d'absorption est intégré à l'intérieur d'au moins un bras (38) d'une fourche (16) du cadre (10) du vélo.

10. Dispositif de limitation de vibrations dans un vélo selon l'une des revendications précédentes, **caractérisé en ce que** la gamme donnée des vibrations filtrées et absorbées par au moins un dispositif (20) de filtration et d'absorption se situe entre 20 Hz et 50 Hz.

11. Vélo équipé du dispositif de limitation de vibrations selon l'une des revendications précédentes.
